# DEMANDE DE BREVET EUROPEEN

(11) **EP 0 888 881 A1**
(43) Date de publication de la demande: **07.01.1999**
(21) Numéro de dépôt: 98401490.2
(22) Date de dépôt: 18.06.1998
(51) Int. Cl.: B32B 15/01, B32B 7/04

(54) **Panneau structural léger**

(30) Priorité: 30.06.1997 FR 9708181
(71) Demandeur: SOLLAC, 92800 Puteaux (FR)
(72) Inventeur: Patou, Pascal, 13760 Saint Cannat (FR)
(74) Mandataire: Ventavoli, Roger

(57) **Abrégé**

Procédé d'assemblage d'un panneau structural léger comportant au moins une âme métallique, et au moins deux peaux de parement également métalliques, les peaux recouvrant l'âme pour former au moins une structure de type sandwich, caractérisé en ce que :
- on développe en continu, un feuillard, dont la largeur correspond à la hauteur de l'âme, sous la forme d'un serpentin définissant des bandes sensiblement parallèles espacées d'un pas régulier, raccordées par des boucles, le feuillard étant perpendiculaire aux plans des deux peaux,
- on pose les peaux de part et d'autre du serpentin, perpendiculairement aux bandes sensiblement parallèles et espacées d'un pas régulier, de façon à réaliser une structure sandwich,
- on soude les deux peaux sur l'âme.

## Description

La présente invention concerne un panneau structural léger comportant au moins une âme métallique, et au moins deux peaux de parement également métalliques, les peaux recouvrant l'âme pour former au moins une structure de type sandwich.

Il est connu des panneaux structuraux allégés composés d'une plaque de tôle sur laquelle sont soudés des raidisseurs. L'inconvénient de ces panneaux est lié à leur manque de rigidité car leur structure est soit ouverte, c'est-à-dire que les raidisseurs n'ont qu'une fonction d'entretoise et n'interviennent pas ou peu dans la rigidité des panneaux, soit semi-fermée, c'est-à-dire que lesdits panneaux ne comportent qu'une seule peau.

Il est connu également des panneaux dont la structure est dite "cloisonnée", c'est-à-dire comportant une âme alvéolaire, et deux peaux extérieures réunies par l'âme alvéolaire. Dans son principe, ces panneaux sont remarquablement adaptés aux sollicitations mécaniques en flexion, puisque les contraintes sont reprises par les peaux extérieures, tandis que l'âme n'a pour but que d'augmenter l'inertie, en assurant un écartement entre les deux peaux extérieures. Les panneaux les plus répandus sont de type dit "nid d'abeille" ou encore de type "corrugué", l'âme étant formée, dans ce cas, d'au moins une tôle ondulée.

Les panneaux ci-dessus décrits présentent l'inconvénient d'être difficiles à assembler. Les problèmes d'accessibilité imposent un assemblage réalisé par collage. Cette technique de collage est, d'une part, coûteuse et, d'autre part, les liaisons qui sont réalisées par collage résistent mal à une température supérieure à 150°C. Par exemple, en cas d'incendie à bord d'un navire, les planchers réalisés avec ce type de panneaux et supportant les passagers ne doivent pas s'affaisser trop rapidement. Enfin, il est impossible de souder des pièces additionnelles sur ces panneaux, car il existe un grand risque de dégrader les parties de panneau portant ces pièces.

Le but de l'invention est de proposer un procédé d'assemblage de panneau rigide léger composé de préférence d'un seul matériau de base et qui résiste à une élévation de température.

L'invention a pour objet un procédé d'assemblage d'un panneau structural léger comportant au moins une âme métallique, et au moins deux peaux de parement également métalliques, les peaux recouvrant l'âme pour former au moins une structure de type sandwich, caractérisé en ce que :
- on développe en continu, un feuillard, dont la largeur correspond à la hauteur de l'âme, sous la forme d'un serpentin définissant des bandes sensiblement parallèles espacées d'un pas régulier, raccordées par des boucles, le feuillard étant perpendiculaire aux plans des deux peaux,
- on pose les peaux de part et d'autre du serpentin, perpendiculairement aux bandes sensiblement parallèles et espacées d'un pas régulier, de façon à réaliser une structure sandwich,
- on soude les deux peaux sur l'âme.

Dans une autre forme de l'invention,
- on développe le serpentin sur une première peau,
- on soude ladite première peau sur le serpentin,
- on applique une seconde peau sur le serpentin pour former la structure sandwich,
- on soude ladite seconde peau sur le serpentin.

Sous une autre forme de l'invention,
- on développe le serpentin sur une première peau comportant un rayon de courbure dans un plan perpendiculaire aux bandes du serpentin, le plan de chacune des bandes passant par le centre de courbure,
- on soude ladite première peau sur le serpentin,
- on applique une seconde peau sur le serpentin, peau qui enveloppe la courbure générée par la première peau sur le serpentin,
- on soude ladite seconde peau sur le serpentin.

Les autres caractéristiques de l'invention sont :
- le feuillard est perforé de motifs espacés d'un pas régulier de manière à alléger la structure sandwich,
- on assemble la structure sandwich de façon que les boucles du serpentin forment des saillies dépassant le plan défini par les peaux,
- les boucles sont déformées en extrémité pour réduire localement la largeur du feuillard et la hauteur de l'âme afin d'assurer l'imbrication de deux panneaux et le raboutage des peaux d'un panneau contre les peaux de l'autre panneau,
- la déformation des boucles est réalisée par la formation d'une nervure ménagée sur le feuillard, en extrémité des boucles, réduisant ainsi la largeur dudit feuillard et la hauteur de l'âme,
- on soude les peaux par une technique choisie parmi le soudage électrique par point, le soudage MAG, MIG, TIG, LASER, le brasage, le soudage LASER par transparence,
- l'âme et au moins une peau sont en acier galvanisé, le soudage étant effectué par un brasage assuré par fusion du revêtement de l'âme et d'au moins une peau.

L'invention concerne également un dispositif pour la mise en oeuvre du procédé d'assemblage d'un panneau structural léger qui comporte au moins une âme métallique et au moins deux peaux de parement également métalliques, les peaux recouvrant l'âme pour former au moins une structure de type sandwich caractérisé en ce qu'il comprend :
- au moins une dérouleuse d'un feuillard, dont la largeur correspond à la hauteur de l'âme,
- un mors de maintien d'une extrémité du feuillard,
- un bâti comportant un écarteur situé entre la dérouleuse et le mors dont le déplacement correspondant sensiblement à la largeur d'un panneau et qui permet la mise en forme du serpentin définissant des bandes en continu, sensiblement parallèles espacées d'un pas régulier, raccordées par des boucles,
- un moyen de soudage pouvant accéder de part et d'autre du plan de déplacement de l'écarteur.

Les autres caractéristiques de l'invention sont :
- la dérouleuse est constituée d'une cage comportant un axe placé perpendiculairement au plan de déplacement de l'écarteur,
- l'écarteur comprend deux peignes, dont au moins un est mobile, les dents des peignes s'imbriquant alternativement les unes dans les autres de façon à dégager un passage rectiligne pour la bande de feuillard avant écartement, au moins un peigne assurant le déplacement du feuillard sur sensiblement la largeur d'un panneau pour former le serpentin,
- l'écarteur comprend deux peignes, les dents des peignes s'imbriquant alternativement les unes dans les autres de façon à dégager un passage rectiligne pour la bande de feuillard avant écartement, chaque dent d'au moins un des peignes assurant le déplacement du feuillard sur sensiblement la largeur d'un panneau, permettant ainsi la mise en place de deux bandes sensiblement parallèles du serpentin raccordées par une boucle,
- les dents des peignes de l'écarteur sont munies de galets.

L'invention concerne également un panneau structural léger comportant au moins une âme métallique, et au moins deux peaux de parement également métalliques, les peaux recouvrant l'âme pour former au moins une structure de type sandwich, qui se caractérise en ce que l'âme est composée d'un feuillard, dont la largeur correspond à la hauteur de l'âme, feuillard formant un serpentin définissant des bandes sensiblement parallèles espacées d'un pas régulier, raccordées par des boucles.

Une caractéristique du panneau selon l'invention est :
- les boucles du serpentin forment des saillies dépassant le plan des peaux,
- les extrémités des boucles en saillies du serpentin ont une hauteur inférieure à la hauteur de l'âme pour assurer l'imbrication de deux panneaux et le raboutage des peaux d'un panneau contre les peaux de l'autre panneau.

La description qui suit et les dessins annexés, le tout donné à titre d'exemple non limitatif, fera bien comprendre l'invention.

La figure 1 présente un exemple de panneau structural, selon l'invention.

La figure 2 présente une autre forme de l'invention, dans laquelle les peaux sont courbées.

Les figures 3A et 3B présentent une série de quatre panneaux selon l'invention et un mode d'assemblage des panneaux.

La figure 4 présente un schéma de principe du dispositif de réalisation de l'assemblage de panneau selon l'invention avant écartement.

La figure 5 présente un schéma de principe du dispositif de réalisation de l'assemblage de panneau selon l'invention après écartement.

La figure 6 présente un schéma de principe du dispositif de réalisation de l'assemblage de panneau selon l'invention après écartement et pose des panneaux.

La présente invention concerne plus particulièrement le domaine technique des panneaux structuraux destinés à la fabrication de plates-formes, telles que plate-forme d'ascenseur, de monte-charge, de véhicule lourd, comme un semi-remorque, de planchers porteurs tels que pont de navire, coque de navire ou panneau de bâtiment industriel. Dans la plupart de ces applications, il est essentiel que les panneaux structuraux résistent au feu en cas d'incendie. D'autre part, l'allégement, du fait des caractéristiques mécaniques élevées du matériau de base employé, assure une réduction de la puissance de levage et/ou une réduction de la charge des structures porteuses.

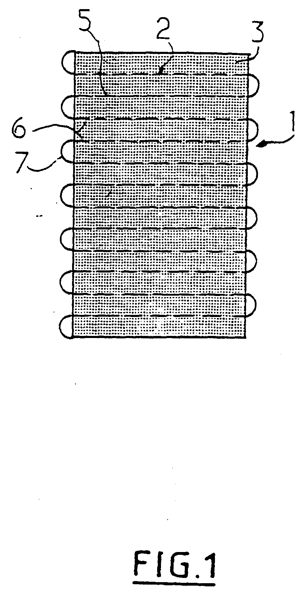

La figure 1 présente un panneau 1 structural léger selon l'invention qui comporte au moins une âme 2 métallique, et au moins deux peaux 3 de parement également métalliques, les peaux 3 recouvrant l'âme pour former au moins une structure de type sandwich. L'âme 2 du panneau est composée d'un feuillard 4, dont la largeur correspond à la hauteur de l'âme 2, formant un serpentin 5 définissant des bandes 6 sensiblement parallèles espacées d'un pas régulier, raccordées par des boucles 7. Deux peaux 3 sont soudées perpendiculairement de part et d'autre des bandes 6 sensiblement parallèles.

Il peut être envisagé, en fonction de la hauteur du feuillard, des panneaux ayant localement, des zones d'épaisseurs variables, zones nécessitant des caractéristiques mécaniques adaptées particulières.

Le panneau 1 est réalisé par un procédé d'assemblage dans lequel :
- on développe en continu, un feuillard 4, dont la largeur correspond à la hauteur de l'âme 2, sous la forme d'un serpentin 5 définissant des bandes 6 sensiblement parallèles espacées d'un pas régulier, raccordées par des boucles 7, le feuillard 4 étant perpendiculaire aux plans des deux peaux 3,
- on pose de part et d'autre du serpentin 5, perpendiculairement aux bandes 6 sensiblement parallèles espacées d'un pas régulier les peaux 3, de façon à réaliser une structure sandwich,
- on soude les deux peaux 3 sur l'âme 2.

Dans une autre forme de l'invention :
- on développe le serpentin 5 sur une première peau 3,
- on soude ladite première peau 3 sur le serpentin 5,
- on applique une seconde peau 3 sur le serpentin 5 pour former la structure sandwich,
- on soude ladite seconde peau 3 sur le serpentin 5.

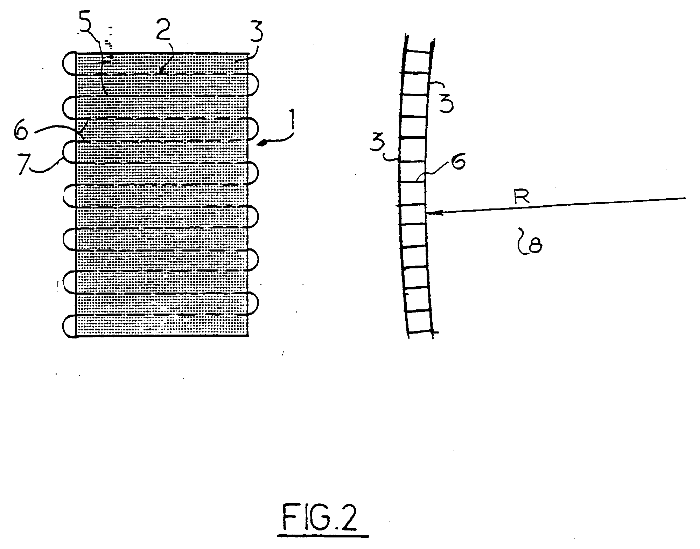

Sous une autre forme de l'invention présenté sur la figure 2 :
- on développe le serpentin 5 sur une première peau 3 comportant un rayon de courbure R dans un plan 8 perpendiculaire au bandes 6 du serpentin 5, le plan des bandes passant par le centre de courbure,
- on soude ladite première peau 3 sur le serpentin 5,
- on applique une seconde peau 3 sur le serpentin 5, peau qui enveloppe la courbure générée par la première peau sur le serpentin,
- on soude ladite seconde peau 3 sur le serpentin 5.

Dans le but d'alléger la structure sandwich, on perfore le feuillard de motifs répétitifs espacés d'un pas régulier. Une découpe, par exemple, en forme d'ove, ne réduit pas les caractéristiques mécaniques en pression du panneau.

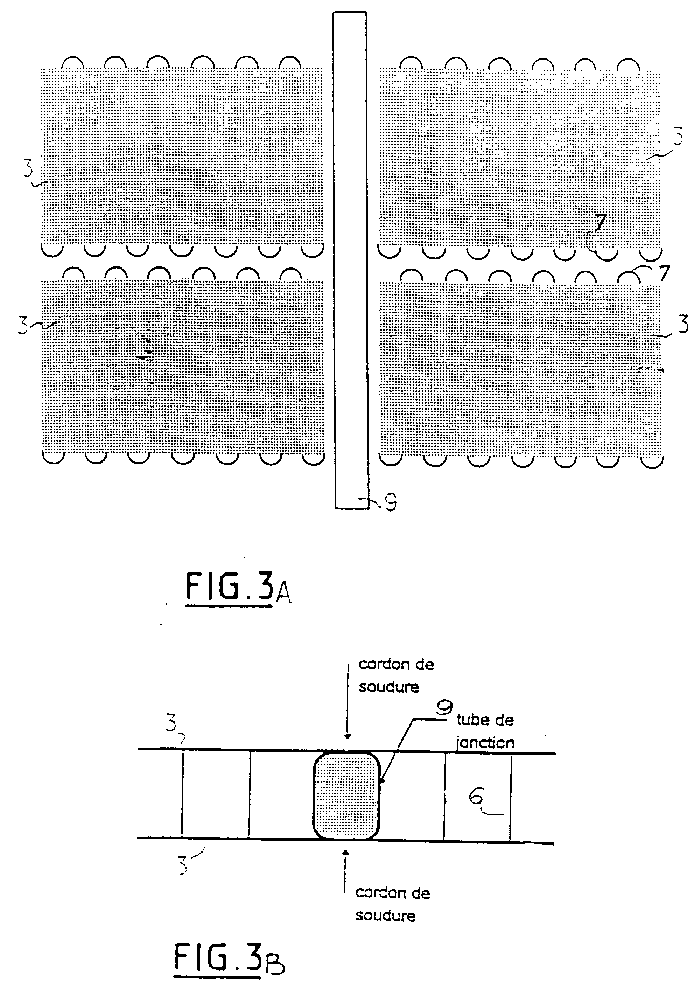

Dans une forme préférentielle de l'invention, on assemble le panneau sandwich de façon que les boucles 7 du serpentin 5 forment des saillies dépassant le plan défini par les peaux. Ainsi il est possible comme représenté sur les figures 3A et 38, d'associer deux panneaux entre eux de manière que les boucles, en saillies de l'un des panneaux s'emboîtent respectivement entre deux boucles de l'autre panneau.

Pour faciliter le montage de deux panneaux concomitants, les boucles sont déformées en extrémité pour réduire localement la largeur du feuillard et la hauteur de l'âme afin d'assurer l'imbrication de deux panneaux et le raboutage des peaux d'un panneau contre les peaux de l'autre panneau. La déformation des boucles peut être réalisée par formation d'une nervure ménagée sur le feuillard, en extrémité des boucles, réduisant ainsi la largeur dudit feuillard et la hauteur de l'âme. D'une autre manière, une légère compression de l'extrémité de la boucle, perpendiculairement au plan des peaux, peut assurer un léger flambage du feuillard et une réduction de la hauteur de l'âme.

Dans l'axe de jointure perpendiculaire à celui présentant les saillies, il est possible d'insérer un tube 9 de jonction s'emboîtant longitudinalement entre les peaux, au niveau de l'âme, un cordon de soudure assurant la liaison des bords de deux panneaux adjacents et du tube 9 de liaison.

On soude les peaux par une technique choisie parmi le soudage électrique par point, le soudage MAG, MIG, TIG, LASER, le soudage LASER par transparence.

Pour souder l'âme 2 sur une des peaux 3, les matériaux dont sont constituées âme et peaux doivent présenter des températures de fusion voisines. Il est préférable d'utiliser un même matériau pour réaliser l'ensemble du panneau 1. L'acier s'impose à partir du moment où la tenue en température devient essentielle. L'emploi de l'acier permet d'envisager la réalisation d'un panneau 1 structural résistant mécaniquement à une charge utile même lorsque ledit panneau est soumis, en cas d'incendie, à des températures de 350°C, la ruine du panneau n'intervenant qu'au dessus de 500°C.

Ces techniques de soudage sont généralement utilisées dans le cas où il y a accessibilité de part et d'autre de l'assemblage de l'âme et de la peau, comme, par exemple, dans la réalisation de panneau 1 structural réalisé à partir d'une peau perforée. Dans une réalisation d'une structure de type sandwich, dans laquelle au moins une seconde peau 3 est associée à l'âme 2 sans accès direct au serpentin de l'âme 2, la soudure est effectuée par soudage LASER par transparence. Cette technique est nécessaire pour un soudage dans le cas où il n'y a accessibilité que d'un côté de la seconde peau 3.

Lorsque l'acier utilisé pour la réalisation des panneaux est galvanisé, le soudage est effectué par une technique de brasage, le brasage étant assuré par fusion du zinc du revêtement de l'âme et d'au moins une peau.

De façon à assurer une protection contre la corrosion du panneau, l'âme 2 et au moins une peau 3 sont en acier galvanisé. Le zinc fond à la température de 420°C environ, de ce fait, un type de brasage peut être réalisé avec le zinc du revêtement. Pour assurer une résistance mécanique à une température supérieure, ou une résistance chimique en milieu corrosif, un autre type de brasage particulier peut être utilisé.

Dans le procédé de soudage par résistance, l'échauffement par effet joule se concentre dans les zones à haute résistance électrique, et notamment dans les zones de contact entre l'âme 2 et les peaux 3. D'autres moyens de soudage peuvent être utilisés, comme, par exemple, le remplacement de la presse à souder par un four dont la température est légèrement au dessus de la température de fusion de la brasure. Le four peut être chauffé soit par effet Joule, soit par courant de Foucault.

Dans certaines réalisations, notamment dans la construction navale, pour laquelle les conditions de corrosion sont particulièrement sévères, la protection des corps creux contre la corrosion est un problème.

La galvanisation des tôles en acier repose sur le principe de la protection cathodique, le zinc est consommé et il arrive, dans le temps, que la disparition du zinc entraîne la disparition de la protection.

Le feuillard perforé et la structure en serpentin de l'âme permettent une continuité de l'espace entre les deux peaux dans une construction effectuée avec plusieurs panneaux.

Une solution, pour la protection contre la corrosion de l'espace situé entre les peaux, consiste en l'introduction d'un gaz neutre dans l'espace ainsi défini.

Dans un exemple d'application :
- on associe à la construction une réserve d'azote comprimée par exemple à 300 bars munie d'un détendeur,
- on alimente en azote basse pression l'espace entre peaux en purgeant l'air résiduel ,
- on maintient l'espace entre peaux sous une sur pression contrôlée par exemple de 100 Pa.

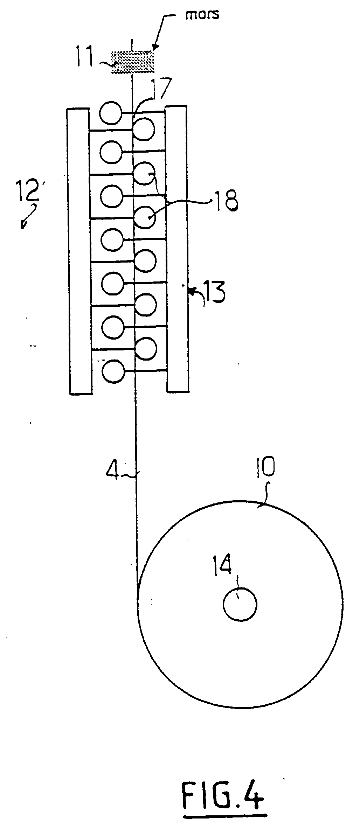

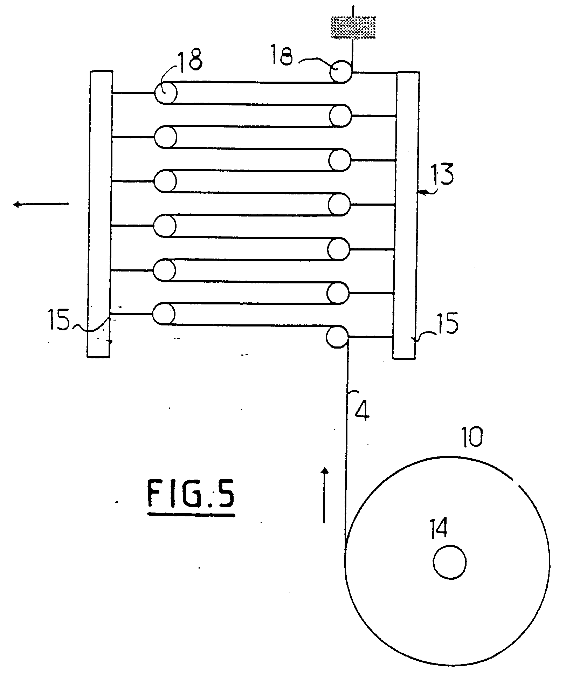

L'invention concerne également un dispositif pour la mise en oeuvre du procédé d'assemblage du panneau structural léger qui comporte, comme présenté sur les figures 4 et 5 :
- au moins une dérouleuse 10 d'un feuillard 4, dont la largeur correspond à la hauteur de l'âme,
- un mors 11 de maintien d'une extrémité du feuillard 4,
- un bâti 12 comportant un écarteur 13 situés entre la dérouleuse 10 et le mors 11 dont le déplacement correspondant sensiblement à la largeur d'un panneau, écarteur qui permet la mise en forme du serpentin définissant des bandes en continu, sensiblement parallèles espacées d'un pas régulier, raccordées par des boucles,
- un moyen de soudage non représenté sur les figures, pouvant accéder de part et d'autre du plan de déplacement de l'écarteur.

Dans un exemple d'application, la dérouleuse 10 est constituée d'une cage comportant un axe 14 placé, par exemple, perpendiculairement au plan de déplacement de l'écarteur.

L'écarteur 13 comprend deux peignes 15, dont au moins un est mobile, les dents des peignes s'imbriquant alternativement les unes dans les autres de façon à dégager, avant écartement, un passage rectiligne 17 destiné au passage du feuillard, comme matérialisé sur la figure 4.

De façon à respecter un pas entre les bandes 6 du serpentin, les dents des peignes de l'écarteur 13 sont munies de galets 18.

La figure 5 présente le dispositif pour la mise en oeuvre du procédé d'assemblage, après écartement des peignes 15. C'est lors de l'écartement des peignes que le feuillard prend la forme d'un serpentin.

Dans une autre forme du dispositif selon l'invention, l'écarteur comprend deux peignes, les dents des peignes s'imbriquant alternativement les unes dans les autres de façon à dégager un passage rectiligne pour la bande de feuillard avant écartement. Chacune des dents d'au moins un des peignes assure individuellement le déplacement du feuillard sur la largeur d'un panneau, permettant ainsi une mise en place progressive et continue de bandes sensiblement parallèles du serpentin raccordées par une boucle.

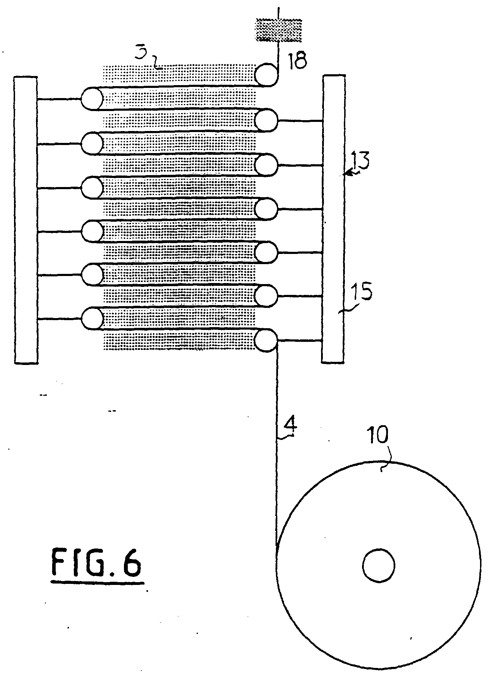

La figure 6 présente, en grisé, la position des deux peaux s'appuyant perpendiculairement sur les bandes dont est constitué le serpentin.

Les galets sont dans cet exemple, des matrices qui permettent de définir la forme et la dimension des boucles, les boucles par exemple en saillies, sont des tenons, et l'espace entre deux galets définit une mortaise pour l'emboîtement de deux panneaux.

Avec un panneau selon l'invention, comportant une amélioration de la résistance à une élévation de température, il est possible de souder des pièces additionnelles, directement sur ledit panneau, en n'importe quel point de sa surface, sans détérioration de celui-ci. De plus, un tel panneau peut être soudé sur un support en acier, et du fait du comportement magnétique de l'acier, le panneau sera aisément recyclable.

## Revendications

1. Procédé d'assemblage d'un panneau structural léger comportant au moins une âme métallique, et au moins deux peaux de parement également métalliques, les peaux recouvrant l'âme pour former au moins une structure de type sandwich, caractérisé en ce que :
- on développe en continu, un feuillard, dont la largeur correspond à la hauteur de l'âme, sous la forme d'un serpentin définissant des bandes sensiblement parallèles espacées d'un pas régulier, raccordées par des boucles, le feuillard étant perpendiculaire aux plans des deux peaux,
- on pose les peaux de part et d'autre du serpentin, perpendiculairement aux bandes sensiblement parallèles et espacées d'un pas régulier, de façon à réaliser une structure sandwich,
- on soude les deux peaux sur l'âme.

2. Procédé selon la revendication 1, caractérisé en ce que :
- on développe le serpentin sur une première peau,
- on soude ladite première peau sur le serpentin,
- on applique une seconde peau sur le serpentin pour former la structure sandwich,
- on soude ladite seconde peau sur le serpentin.

3. Procédé selon la revendication 1, caractérisé en ce que :
- on développe le serpentin sur une première peau comportant un rayon de courbure dans un plan perpendiculaire aux bandes du serpentin, le plan de chacune des bandes passant par le centre de courbure,
- on soude ladite première peau sur le serpentin,
- on applique une seconde peau sur le serpentin, peau qui enveloppe la courbure générée par la première peau sur le serpentin,
- on soude ladite seconde peau sur le serpentin.

4. Procédé selon les revendications 1 à 3, caractérisé en ce que le feuillard est perforé de motifs, espacés d'un pas régulier, de manière à alléger la structure sandwich.

5. Procédé selon les revendications 1 à 4, caractérisé en ce qu'on assemble la structure sandwich de façon que les boucles du serpentin forment des saillies dépassant le plan défini par les peaux.

6. Procédé selon les revendications 1 à 5, caractérisé en ce que les boucles sont déformées en extrémité pour réduire localement la largeur du feuillard et la hauteur de l'âme afin d'assurer l'imbrication de deux panneaux et le raboutage des peaux d'un panneau contre les peaux de l'autre panneau.

7. Procédé selon la revendication 6, caractérisé en ce que la déformation des boucles est réalisée par la formation d'une nervure ménagée sur le feuillard, en extrémité des boucles, réduisant ainsi la largeur dudit feuillard et la hauteur de l'âme.

8. Procédé selon les revendications 1 à 7, caractérisé en ce qu'on soude les peaux par une technique choisie parmi le soudage électrique par point, le soudage MAG, MIG, TIG, LASER, le brasage, le soudage LASER par transparence.

9. Procédé selon les revendications 1 à 8, caractérisé en ce que l'âme et au moins une peau sont en acier galvanisé, le soudage étant effectué par un brasage assuré par fusion du revêtement de l'âme et d'au moins une peau.

10. Dispositif pour la mise en oeuvre du procédé d'assemblage d'un panneau structural léger selon les revendications 1 à 9, comportant au moins une âme métallique et au moins deux peaux de parement également métalliques, les peaux recouvrant l'âme pour former au moins une structure de type sandwich, caractérisé en ce qu'il comprend :
- au moins une dérouleuse d'un feuillard, dont la largeur correspond à la hauteur de l'âme,
- un mors de maintien d'une extrémité du feuillard,
- un bâti comportant un écarteur situé entre la dérouleuse et le mors dont le déplacement correspondant sensiblement à la largeur d'un panneau et qui permet la mise en forme du serpentin définissant des bandes en continu, sensiblement parallèles, espacées d'un pas régulier, raccordées par des boucles,
- un moyen de soudage pouvant accéder de part et d'autre du plan de déplacement de l'écarteur.

11. Dispositif selon la revendication 10, caractérisé en ce que la dérouleuse est constituée d'une cage comportant un axe placé perpendiculairement au plan de déplacement de l'écarteur.

12. Dispositif selon la revendication 10, caractérisé en ce que l'écarteur comprend deux peignes, dont au moins un est mobile, les dents des peignes s'imbriquant alternativement les unes dans les autres de façon à dégager un passage rectiligne pour la bande de feuillard avant écartement, au moins un peigne assurant le déplacement du feuillard sur sensiblement la largeur d'un panneau pour former le serpentin.

13. Dispositif selon la revendication 10, caractérisé en ce que l'écarteur comprend deux peignes, les dents des peignes s'imbriquant alternativement les unes dans les autres de façon à dégager un passage rectiligne pour la bande de feuillard avant écartement, chaque dent d'au moins un des peignes assurant le déplacement du feuillard sur sensiblement la largeur d'un panneau, permettant ainsi la mise en place de deux bandes sensiblement parallèles du serpentin raccordées par une boucle.

14. Dispositif selon les revendications 12 et 13, caractérisé en ce que les dents des peignes de l'écarteur sont munies de galets.

15. Panneau structural léger obtenu par le procédé selon les revendications 1 à 9, comportant au moins une âme métallique, et au moins deux peaux de parement également métalliques, les peaux recouvrant l'âme pour former au moins une structure de type sandwich, caractérisé en ce que l'âme est composé d'un feuillard, dont la largeur correspond à la hauteur de l'âme, feuillard formant un serpentin définissant des bandes sensiblement parallèles espacées d'un pas régulier, raccordées par des boucles.

16. Panneau selon la revendication 15, caractérisé en ce que les boucles du serpentin forment des saillies dépassant le plan des peaux.

17. Panneau selon les revendications 15 et 16, caractérisé en ce que les extrémités des boucles en saillies du serpentin ont une hauteur inférieure à la hauteur de l'âme pour assurer l'imbrication de deux panneaux et le raboutage des peaux d'un panneau contre les peaux de l'autre panneau.
